Europäisches Patentamt

(19) European Patent Office

Office européen des brevets

(11) Publication number: **0 240 225**
**A2**

## (12) EUROPEAN PATENT APPLICATION

(21) Application number: **87302523.3**

(22) Date of filing: **24.03.87**

(51) Int. Cl.⁴: **A47J 45/06**

(30) Priority: **04.04.86 US 848088**

(43) Date of publication of application:
**07.10.87 Bulletin 87/41**

(84) Designated Contracting States:
**DE FR GB IT**

(71) Applicant: **KIDDE CONSUMER DURABLES CORP.**
**2 Bala Cynwyd Plaza 333 City Line Avenue**
**Bala Cynwyd Pennsylvania 19004(US)**

(72) Inventor: **Gildersleeve, Paul**
**29 Midrocks Road**
**Ridgefield Connecticut 06877(US)**
Inventor: **Stewart, James B.**
**114 Everdale Road**
**Randolph New Jersey 07869(US)**

(74) Representative: **Thomson, Roger Bruce et al**
**POLLAK MERCER & TENCH High Holborn**
**House 52-54 High Holborn**
**London WC1V 6RY(GB)**

(54) **Handle for saucepans and the like.**

(57) A handle for use with a saucepan or the like has chines (23) and a lower surface formed from the vertex (24) of opposing convex surfaces (22) to assist handling of the saucepan or the like to which it is attached. The chines (23) are adapted to fit within the joints and tips of the fingers on the hand of the user. The handle facilitates gripping the saucepan while pouring material from the pan.

FIG.5

## HANDLE FOR SAUCEPANS AND THE LIKE

### Background Of The Invention

This invention relates to a handle which is typically attached to a pan or pot of the type similar to a frying or sauce pan. Typically, the handle portion is of separate construction and is attached to the side of the pan. The pan is made of a metal material which can withstand the high operating temperatures associated with use on a gas or electric type stove. Handles used with these metal pans are often formed from a plastic type material which prevents the use of the pan in an oven chamber. Handles for sauce pans which are also made of a material which can withstand oven temperatures are typically flat or include a channeled upper surface and are very difficult to grasp and to hold while pouring the material from the pan.

### Summary Of The Invention

The handle contemplated by the present invention is provided for firm grippping and for easy pouring of fluids or food products from the sauce pan. Preferably, the handle contemplated by this invention is made of a metal material such that the pan may be placed into an oven chamber without the handle material being destroyed by exposure to excessive heat. The invention, however, may be made of any material which can withstand the normal operating temperatures of its intended use.

A preferred embodiment of the invention includes chines on the lower portion of the handle which facilitates gripping of the handle by the center joint of the fingers. The chines may be formed in an effective V-shape, which can be easily gripped by the fingers wrapped around opposite sides of the chine, such that the pot or pan may be easily held for pouring without slippage across the surface of the hand and fingers and such that the pan is comfortable to lift.

Further advantages of the invention will become apparent by particularly pointing out the embodiment shown in the drawings. For the purpose of illustrating the invention, there is shown in the drawings a form which is presently preferred; it being understood, however, that this invention is not limited to the precise arrangements and instrumentalities shown.

### • Brief Description Of The Drawings

Figure 1 is a top view of the invention as adapted for use on a pan.

Figure 2 is a cross sectional view of the invention as taken along line 2-2 in Figure 1.

Figure 3 is an end view of the invention showing the end which is typically attached to the pan.

Figures 4 and 5 are cross-sectional views of the invention taken along specific points along its length.

Figure 6 is a perspective view of the invention as shown in Figure 1.

### Detailed Description Of The Invention

In the drawings, wherein like numerals indicate like elements, an embodiment of a handle as contemplated by the invention is shown and generally referred to by the numeral 10. The handle 10 includes an attachment end 12 which is typically fixed to the outside of the sauce pan or the like (not shown), a butt end 14 which extends away from the sauce pan, and a gripping portion 16 which is formed between the attachment end 12 and butt end 14.

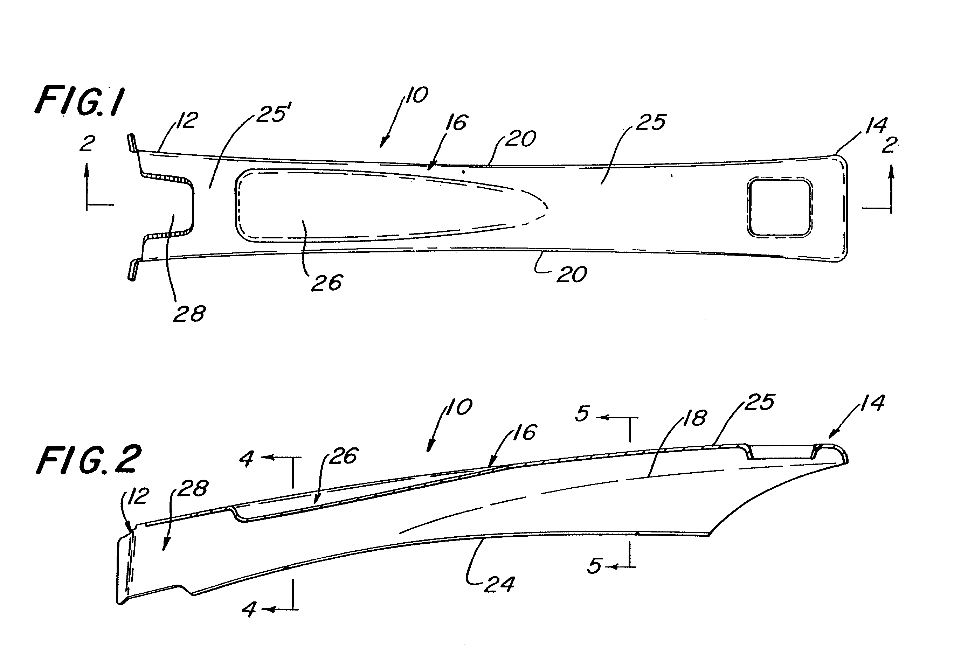

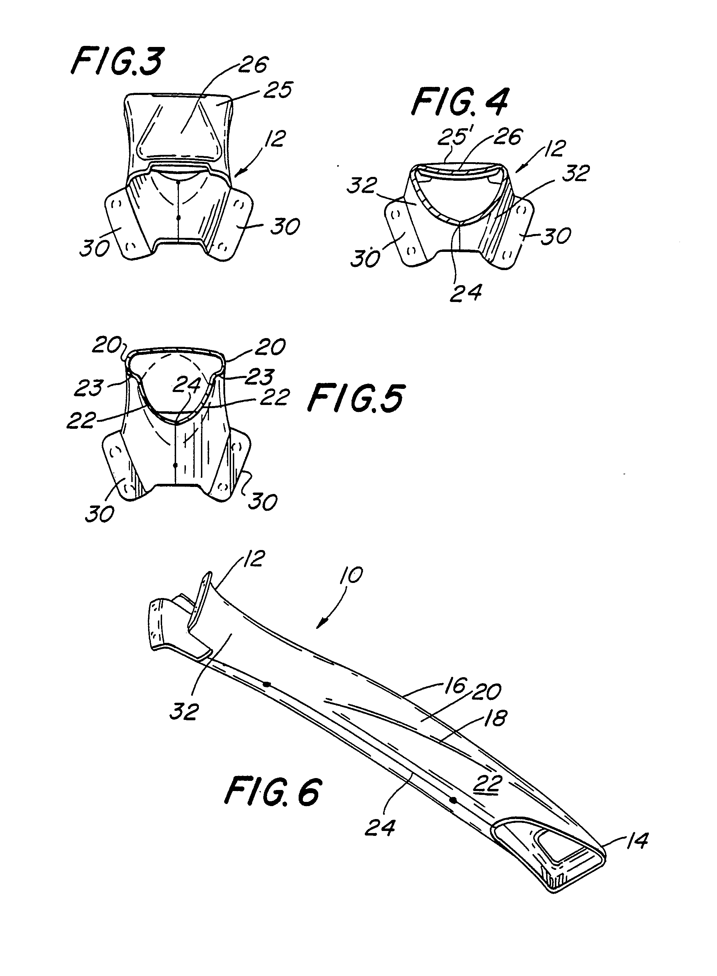

The gripping portion 16, as shown, is generally formed from an upper portion and lower portion where the upper portion is generally broader than the lower portion. The joint between the upper portion and the lower portion generally forms grip line 18, as can be seen in Figures 2 and 6. When viewed at cross section line 5-5 in Figure 5, grip line 18 is formed by flares 20 on the upper portion which extend outwardly from opposing finger grip surfaces 22 to form a projecting chine 23. The chine 23 is created at the joinder of the flares 20 and finger grip surfaces 22 of the lower portion. The finger grip surfaces 22 on opposite sides of the handle 10 have a generally concave shape and extend from shoulders 23 to join at a vertex 24.

The structure of the handle 10 of the invention is generally formed to fit within the grip of the hand of a person using the sauce pan. The fingers wrap around the handle 10 to increase the gripping capability and to create a comfortable feel while lifting a relatively heavy pan and pouring its filler material. The flares 20 at grip line 18 generally are formed to project into the base of the fingers at the joint adjacent to the palm of the hand on one side and the finger tips on the other. Flares 20 and chines 23 generally are formed to fit within the joint while the remaining portions of the fingers wrap around the vertex 24 so as to grip both surfaces 22. The center joint of the finger is desirably positioned adjacent to vertex 24. The handle 10 is preferrably symmetrical about a center line extending vertically through vertex 24 and the center of the handle 10, the handle 10 and may be gripped by either a right-handed or a left-handed person with ease. The concave surfaces of the finger grip 22 generally project into the fleshy portion of the fingers so that a firm grip can be maintained on the handle 10 while the various projections fit within the joints on the hand.

As can be seen in Figure 6, the grip line is not required to extend through the entire length of the handle but may terminate at some point along the gripping portion 16. In the area where the grip line 18 terminates, it is preferred that the chine 23 decrease in its distance of projection with respect to the convex surfaces 22 and blend in to the remaining portion of the handle 10. As can be seen in Figure 4, the front of the gripping portion 16 adjacent to the attachment end 12 is generally formed from two lower convex surfaces 32 and an upper convex surface 25'.

As seen in Figures 2 and 4, a thumb depression 26 is provided on the upper surface 25 of the handle 10 adjacent to surface 25'. A thumb depression 26 extends below the uppermost portion of the surface 25. Depression 26 is adapted to receive the thumb during gripping of the handle 10 so as to stabilize the hand grip.

The handle 10, as indicated previously, may be formed from a material that can withstand the normal operating temperatures of an oven. By providing a hollow handle, the surface area of the handle 10 exposed to convecting air currents will be increased and therefore will decrease the temperature of the handle 10. The handle 10 may also be formed from a solid material where the edges of the hollow will become contoured surfaces.

As seen in Figures 3 and 5, the attachment end 12 of the handle generally includes two flanges 30 which project outwardly and are attach to the exterior surface of the pan. Attachment of the flanges 30 to the pan may be made by any suitable means such as a rivet or by welding. If the handle is to be constructed of a material which withstands normal operating conditions of the conventional oven, the attachment means must also be sufficient to withstand these temeperatures. The handle 10 may also include an opening 28 adjacent to the attachment end 12 between the flanges 30. It is generally preferred to provide the opening 28 adjacent to flanges 30, which project somewhat forward of the remainder of the handle, to limit the amount of material directly in contact or adjacent to the sauce pan or the like so as to limit the amount of heat transfered from the sauce pan to the handle 10. Additionally, opening 28 provides further convection surfaces which may facilitate cooling of the handle 10 adjacent to the attachment end 12.

It should be understood that the surfaces 22 and vertex 24, along with projecting chimes 23 and flares 20, may be formed in any suitable manner or arrangement as contemplated by this invention so that the handle 10 may be easily gripped. As seen in figure 1, the handle 10 may also be provided with a central taper such that the overall width of the handle 10 is at a relative minimum somewhere in the middle of the gripping portion 16 and flares in its width towards both the attachment end 12 and butt end 14. Again, the taper in either direction may be varied as desired. However, by providing such gripping surfaces on the handle 10, the sauce pan is effectively stabilized so that, the pan may be more easily lifted and carried and the materials within the pan may be poured with relative ease and comfort to the user.

## Claims

1. A handle for use with a pan or the like, the handle comprising: a relatively upper broad portion and a relatively lower portion, the lower portion forming a series of chines adapted for gripping by the hand of the handle user.

2. A handle as claimed in claim 1 characterised in that the chines have a substantially V-shape.

3. A handle as claimed in claim 1 or 2 characterised in that the chines comprise two opposing convex surfaces joining at a lower vertex, with the opposite ends of the convex surfaces attached to the upper broad portion.

4. A handle as claimed in claim 3 further characterised by a grip line on opposite sides of the handle, the grip line being formed at the chines by the joinder of the upper portion and the opposite ends of the opposing convex surfaces, the joinder forming an outwardly projecting shoulder.

5. A handle as claimed in any preceding claim further characterised by a depression in the upper surface of the broad portion adapted to receive the thumb of the user.

6. A handle as claimed in any preceding claim characterised in that the broad portion of the handle tapers increasingly outwardly towards the butt end of the handle.

7. A handle as claimed in claim 4 characterised in that the grip line tapers upwardly away from the under portion of the handle as it approaches the butt end of the handle.

8. A handle as claimed in claim 4 characterised in that the grip line is formed on only a portion of the length of the handle.

9. A handle as claimed in claim 8 characterised in that a portion of the handle formed without the gripline is formed by three relatively convex surfaces.

10. A handle for use with a pan or the like, the handle comprising: an attachment end; a gripping portion; and a butt end, the gripping portion having a lower section including two gripping surfaces which form a vertex at the bottom of the gripping portion, a flared section adjacent to the opposite ends of the lower section, the joinder of the flared portion and the lower section forming an outwardly projecting shoulder or chine, and an upper surface connecting the opposing flared sections on opposite sides of the gripping portion, the upper surface having a depression adjacent to the attachment end of the handle and adapted to receive a thumb of a hand gripping the handle.

**FIG.1**

**FIG.2**

0 240 225

**FIG.3**

**FIG.4**

**FIG.5**

**FIG.6**